(19) Europäisches Patentamt
European Patent Office
Office européen des brevets

(11) **EP 4 098 492 B1**

(12) **FASCICULE DE BREVET EUROPEEN**

(45) Date de publication et mention
de la délivrance du brevet:
**24.01.2024 Bulletin 2024/04**

(21) Numéro de dépôt: **21382491.5**

(22) Date de dépôt: **02.06.2021**

(51) Classification Internationale des Brevets (IPC):
**B60R 16/02** *(2006.01)* **H01B 17/30** *(2006.01)*
**H02G 3/22** *(2006.01)*

(52) Classification Coopérative des Brevets (CPC):
**B60R 16/0222; H01B 17/30; H02G 3/22**

(54) **PASSE-CLOISON POUR AU MOINS UN CÂBLE ET/OU AU MOINS UN TUYAU DESTINÉ À TRAVERSER UNE CLOISON**

SCHOTTDURCHFÜHRUNG FÜR MINDESTENS EIN KABEL UND/ODER MINDESTENS EIN ROHR ZUM DURCHFÜHREN DURCH EINE WAND

CABLE PENETRATION FOR AT LEAST ONE CABLE AND/OR AT LEAST ONE PIPE INTENDED FOR PENETRATING A PARTITION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**07.12.2022 Bulletin 2022/49**

(73) Titulaire: **Catelsa-Caceres SAU**
**10005 CACERES (ES)**

(72) Inventeurs:
• **NUNEZ, Miguel-Angel**
**10005 Caceres (ES)**
• **GAMONAL, Arturo**
**10004 Caceres (ES)**
• **PACHA, Luis Felipe**
**10004 Caceres (ES)**

(74) Mandataire: **Gevers & Orès**
**Immeuble le Palatin 2**
**3 Cours du Triangle**
**CS 80165**
**92939 Paris La Défense Cedex (FR)**

(56) Documents cités:
FR-A1- 2 813 370    US-A- 3 423 518
US-A- 4 912 287    US-A1- 2020 343 706

## Description

### Domaine technique de l'invention

La présente invention concerne un passe-cloison pour au moins un câble et/ou au moins un tuyau destiné à traverser un tablier séparant un habitacle d'un espace moteur d'un véhicule automobile.

### Arrière-plan technologique

Dans un véhicule automobile, le tablier est une pièce qui assure la séparation entre le compartiment moteur et l'habitacle. Ce tablier est notamment traversé par au moins un faisceau de câbles, par exemple électriques, qui assurent les commandes des différents organes du véhicule. Les câbles sont regroupés en un faisceau qui traverse une ouverture ménagée dans le tablier. Cette traversée doit être étanche, tant à l'eau qu'à la circulation de particules polluantes dans l'habitacle, et être isolée acoustiquement pour éviter la propagation des bruits du groupe moteur dans l'habitacle, et ainsi éviter des nuisances aux passagers.

US 4 912 287 décrit un passe-cloison pour au moins un câble et/ou au moins un tuyau destiné à traverser un tablier séparant un habitacle d'un espace moteur d'un véhicule automobile, mais ne divulgue pas que la structure de maintien est par ailleurs montée de manière amovible à la fois sur le support et sur le contre-support.

Le document FR-2 884 891 décrit un type passe-cloison constitué d'une pièce comportant une première partie et une seconde partie agencée de façon à ce que la première partie et la seconde partie soient, en utilisation, chacune au contact d'une surface du tablier, l'une du côté de l'habitacle et l'autre du côté du groupe ou espace moteur. Une olive en mousse polyuréthane (PU) est en outre injectée entre la pièce et le faisceau de câbles, la mousse polyuréthane venant fixer le faisceau de câbles dans le passe-cloison une fois rigidifiée.

Ce type de passe-cloison présente plusieurs inconvénients. En effet, une fois rigidifiée, la mousse polyuréthane limite tout mouvement du faisceau de câbles. Par ailleurs, en cas d'un mouvement important du faisceau de câbles, son scellement dans l'olive peut être altérée et les performances acoustiques et/ou d'étanchéité du passe-cloison diminuées.

Un autre inconvénient réside également dans la maintenance de ce type de passe-cloison qui nécessite par exemple de percer l'olive (mousse de polyuréthane) et donc susceptible d'entraîner une perte de ses propriétés et performances.

En outre, la rigidité importante d'un tel passe-cloison, en particulier du fait de la présence de mousse polyuréthane pour maintenir le faisceau de câbles, ne facilite pas son montage sur un véhicule.

L'invention propose un passe-cloison amélioré, permettant notamment un déplacement du câble et/ou tuyau dans le passe-cloison sans risque d'endommagement de celui-ci, et en conséquence de pertes de performances acoustiques et/ou d'étanchéité.

### Résumé de l'invention

Il est donc proposé un passe-cloison pour au moins un câble et/ou au moins un tuyau destiné à traverser un tablier séparant un habitacle d'un espace moteur d'un véhicule automobile, ledit passe-cloison comportant :

- un support ;
- un contre-support monté sur le support de sorte que le support et le contre-support puissent, en utilisation, venir chacun en regard d'une surface opposée du tablier,

ledit passe-cloison étant caractérisé en ce qu'il comporte, en outre, une structure de maintien pour le câble et/ou tuyau, plus souple que le support et le contre-support, et qui est par ailleurs montée de manière amovible à la fois sur le support et sur le contre-support.

Ainsi, grâce à l'invention, la protection du câble et/ou tuyau est améliorée. En effet, la nature plus souple de la structure de maintien, par rapport au support et au contre-support, permet un déplacement du câble et/ou tuyau sans risque d'endommagement de celui-ci dans le passe-cloison.

Le passe-cloison, selon l'invention, peut comprendre une ou plusieurs des caractéristiques ci-dessous, prises isolément les unes avec les autres ou en combinaison les unes avec les autres :

- le contre-support est plus souple que le support ;

- le support est réalisé en un matériau donné, le contre-support et la structure de maintien sont réalisés en un matériau plus souple que le matériau du support ;

- le support est réalisé en un matériau thermoplastique et le contre-support est réalisé en un matériau thermoplastique élastomère, en un matériau thermoplastique élastomère vulcanisé ou en un matériau élastomère ;

- la structure de maintien est réalisée en un matériau élastomère, en un matériau thermoplastique élastomère ou en un matériau thermoplastique élastomère vulcanisé ;

- la structure de maintien comprend une première couronne et une seconde couronne, opposée à la première couronne, la première couronne étant montée de manière amovible au contact d'un plateau du support et la seconde couronne étant montée de manière amovible au contact d'une collerette du contre-support ;

- au moins un premier col et au moins un second col sont respectivement en saillie de la première couronne et de la seconde couronne, les cols étant configurés pour maintenir le câble et/ou tuyau ;

- la structure de maintien a une forme générale de tonneau, ceci permettant de définir une chambre entourée d'une paroi annulaire ;

- la paroi annulaire comporte au moins un premier orifice de sorte qu'une communication fluidique soit permise entre la chambre et un premier volume, défini entre la structure de maintien en forme de tonneau et le contre-support ;

- le contre-support comporte au moins un second orifice de sorte qu'une communication fluidique soit permise entre un premier volume, défini entre la structure de maintien en forme de tonneau et le contre-support, et un second volume, défini entre le contre-support et le tablier ;

- le support s'étendant autour d'un axe longitudinal est pourvu d'au moins une languette configurée pour empêcher, en utilisation, une rotation du passe-cloison autour de cet axe longitudinal sensiblement parallèle avec le câble et/ou tuyau.

L'invention concerne également un procédé d'installation d'au moins un câble et/ou au moins un tuyau dans un passe-cloison tel que décrit précédemment, le procédé comportant les étapes suivantes :

- Installer un ensemble comportant le support et le contre-support sur le tablier,

- Insérer le câble et/ou tuyau dans la structure de maintien, puis

- Monter la structure de maintien, munie du câble et/ou tuyau, sur l'ensemble.

Le procédé, selon l'invention, peut comprendre la caractéristique ci-dessous :

- préalablement à l'installation de l'ensemble, le contre-support est monté sur le support de sorte à former l'ensemble.

**Brève description des figures**

L'invention sera mieux comprise à l'aide de la description qui va suivre, donnée uniquement à titre d'exemple et faite en se référant aux dessins annexés dans lesquels :

[Fig. 1] la figure 1 représente une vue schématique en perspective d'un exemple d'ensemble comprenant un support et un contre-support du passe-cloison selon l'invention,

[Fig. 2] la figure 2 représente une autre vue schématique en perspective de la figure 1,

[Fig. 3] la figure 3 représente une vue schématique en perspective d'un exemple d'une structure de maintien du passe-cloison selon l'invention,

[Fig. 4] la figure 4 représente une vue schématique en coupe et en perspective d'un exemple d'un passe-cloison selon l'invention,

[Fig. 5] la figure 5 représente une autre vue schématique en coupe du passe-cloison de la figure 4,

[Fig. 6] la figure 6 représente une vue schématique en coupe d'un autre exemple de passe-cloison selon l'invention, et

[Fig. 7] la figure 7 représente une vue schématique en coupe d'un autre exemple de passe-cloison selon l'invention configuré pour le passage de deux faisceaux de câbles.

## Description détaillée de l'invention

Il sera compris que dans ce qui suit il est question d'un exemple de passe-cloison 100 selon l'invention pour au moins un câble et/ou au moins un tuyau destiné à traverser un tablier T séparant un habitacle d'un espace moteur d'un véhicule automobile. Le passe-cloison 100 selon l'invention comprend un support 10, un contre-support 20 et une structure 30 de maintien.

Il sera compris que le passe-cloison 100 est conçu pour le passage d'un ou plusieurs câbles pouvant être regroupés en un ou plusieurs faisceaux F, F' de câbles. Il sera également compris qu'un câble peut être remplacé par un tuyau et donc que le passe-cloison 100 est aussi conçu pour le passage d'un ou plusieurs tuyaux. Il sera encore compris que le passe-cloison 100 est conçu pour le passage d'au moins un câble et d'au moins un tuyau. Dans ce qui suit, il est décrit de manière non limitative un passe-cloison 100 pour au moins un faisceau F, F' de câbles, un faisceau F, F' de câbles regroupant plusieurs câbles.

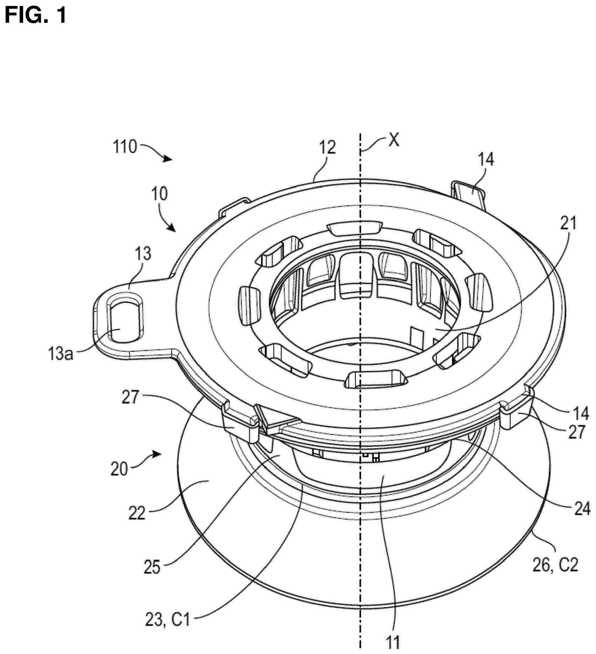

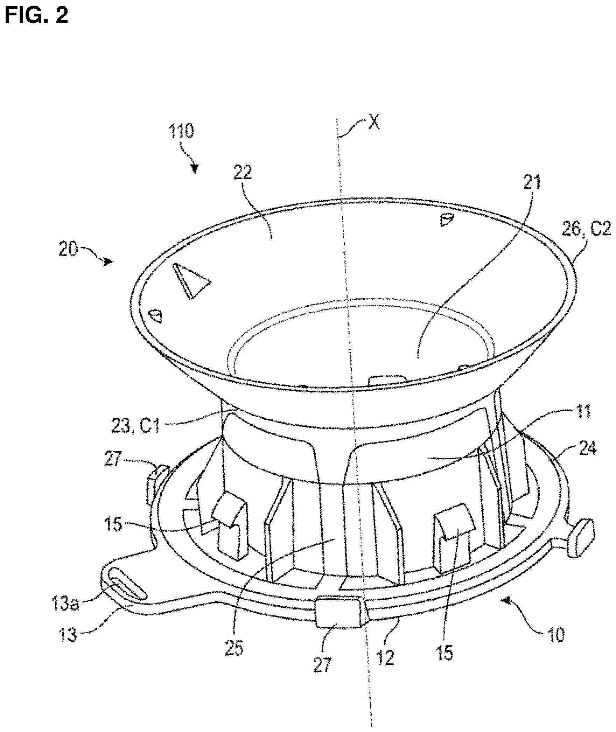

Les figures 1 et 2 montrent l'ensemble 110 formé par le support 10 et le contre-support 20. Avantageusement, le contre-support 20 est surmoulé sur le support 10. En variante, le contre-support 20 peut être monté par clipsage ou tout autre moyen adapté sur le support 10.

Le support 10 a une forme globalement annulaire et s'étend le long d'un axe longitudinal X. Le support 10 comporte une partie cylindrique 11 surmontée d'un plateau 12. Le support 10 peut comporter une languette 13, s'étendant dans le plan du plateau 12 et s'étendant radialement depuis le bord extérieur du plateau 12. La languette 13 comporte en outre une fente 13a destinée à coopérer avec, par exemple un ergot situé sur le tablier T. Le support 10 peut également comporter une pluralité d'appuis 14 répartis sur le bord extérieur du plateau 12.

Le support 10 comporte également une pluralité d'organes 15 de clipsage situés en saillie de la surface inférieure du plateau 12, répartis autour de l'axe X et s'étendant dans la même direction que la partie cylindrique 11. Ces organes 15 de clipsage sont destinés à coopérer avec une ouverture ménagée dans le tablier T du véhicule de sorte à maintenir le passe-cloison 100, une fois installé, en place. Avantageusement, les organes 15 de clipsage sont situés de manière alternée avec les appuis 14 autour de l'axe X.

Le support 10 est en un matériau ayant une rigidité donnée. Ce matériau peu par exemple être un thermoplastique pris de manière non limitative parmi le polypropylène (PP), le polyamide (PA), le polytéthylène téréphtalate (PET), le polybutylène téréphtalate (PBT) ou le polyoxyméthylène (POM).

Le matériau du support 10 peut, en variante, être un thermoplastique chargé par exemple de fibres de verre, de fibres de carbone, de craie ou de talc. La charge de fibres de verre, fibres de carbone, craie ou talc peut s'élever jusqu'à 50%.

Selon le matériau choisi, le module d'Young varie pour être compris entre 100 et 20 000 MPa (mégapascal).

Dans l'exemple montré ici, le contre-support 20 a une forme globalement annulaire s'étendant le long d'un axe longitudinal, qui en utilisation, se confond avec l'axe X du support 10. Le contre-support 20 comporte une portion cylindrique 21, une collerette 22, laquelle est située à une extrémité 23 de la portion cylindrique 21, et une lèvre 24 annulaire rattachée à l'extrémité 23.

Dans l'exemple présenté, la lèvre 24 annulaire est rattachée à l'extrémité 23 par des tenants 25. La lèvre 24 est située à l'opposé de la collerette 22, par rapport à l'extrémité 23. En variante, la lèvre 24 peut être rattachée à l'extrémité 23 par une paroi annulaire pleine. En utilisation, la lèvre 24 est configurée pour être en appui sur le tablier T pour assurer l'étanchéité du passage ménagé dans le tablier T.

La collerette 22 peut avoir une forme tronconique ou en tuyère et est configurée pour pouvoir se déformer de sorte que son orientation change par pliure au niveau de l'extrémité 23 de la portion cylindrique 21, qui correspond à la jonction entre la collerette 22 et la portion cylindrique 21. Ainsi, de par sa forme en tuyère, la collerette 22 comprend une première circonférence C1 au niveau de l'extrémité 23, dont le diamètre est pris sensiblement égal au diamètre de la portion cylindrique 21, et une seconde circonférence C2, dont la dimension est supérieure à la première circonférence C1, située à l'extrémité libre 26 de la collerette 22.

Dans une première configuration, la forme en tuyère de la collerette 22 est orientée d'un côté opposé à la portion cylindrique 21. Autrement dit, dans le référentiel de l'axe X, la circonférence C1 est positionnée entre la circonférence C2 et la lèvre 24. Dans une seconde configuration, prise après déformation de la collerette 22, celle-ci est orientée du côté de la portion cylindrique 21. Autrement dit, dans le référentiel de l'axe X, la circonférence C2 est positionnée entre la circonférence C1 et la lèvre 24.

Une pluralité de plots 27 peut être répartie autour de la lèvre 24. Ces plots 27 sont configurés pour coopérer avec les appuis 14 du support 10. Avantageusement, les plots 27 sont surmoulés sur les appuis 14. Le nombre de plots 27 est alors égal au nombre d'appuis 14. En utilisation, les plots 27 sont configurés pour être comprimés lors du montage du passe-cloison 100 par les appuis 14 contre le tablier T de sorte que le tablier T demeure au contact des organes 15 de clipsage. De la sorte, la lèvre 24 annulaire est maintenue en appui axial contre le tablier T de manière stable dans le temps. Autrement dit, les plots 27 permettent la stabilisation de la lèvre 24.

Le contre-support 20 peut avoir la même rigidité que le support 10 et être en un matériau identique au support 10, comme décrit précédemment.

Avantageusement, le contre-support 20 est plus souple que le support 10. Le contre-support 20 peut être en un matériau plus souple que le matériau du support 10. Cela permet au contre-support 20 de se déformer lorsque monté sur le support 10, ce qui facilite son installation. Ce matériau peut par exemple être un thermoplastique élastomère (TPE) ou un thermoplastique élastomère vulcanisé (TPV) pris de manière non limitative parmi le polyamide/éthylène-propylène-diène monomère (PA/EPDM), le polypropylène/éthylène-propylène-diène monomère (PP/EPDM), le polypropylène/butadiène-acrylonitrile (PP/NBR), le polyamide/butadiène-acrylonitrile (PA/NBR), le polypropylène/styrène-éthylène/butylène-styrène (PP/SEBS), polypropylène/styrène-butadiène-styrène (PP/SBS). La fraction de thermoplastique peut varier de 10 à 40% et la fraction d'élastomère peut varier de 20 à 50%, de sorte que la dureté shore soit comprise entre 40 et 80 Shore A, et de préférence entre 50 et 70 Shore A.

Le matériau du contre-support 20 peut également être un matériau élastomère pris de manière non limitative parmi l'éthylène-propylène-diène monomère (EPDM), le styrène-butadiène (SBR), le butadiène-acrylonitrile (NBR), l'isobutylène-isoprène (IIR) ou encore le caoutchouc naturel (NR).

Ainsi, pour le couple support/contre-support 10, 20, les matériaux utilisés peuvent être choisis de manière non limitative parmi les matériaux énumérés pour chacun des support 10 et contre-support 20. Par exemple, le couple de matériaux choisi peut être PP/TPV(PP/EPDM), PA/TPV(PA/EPDM) ou encore PET/TPE(PP/EPDM).

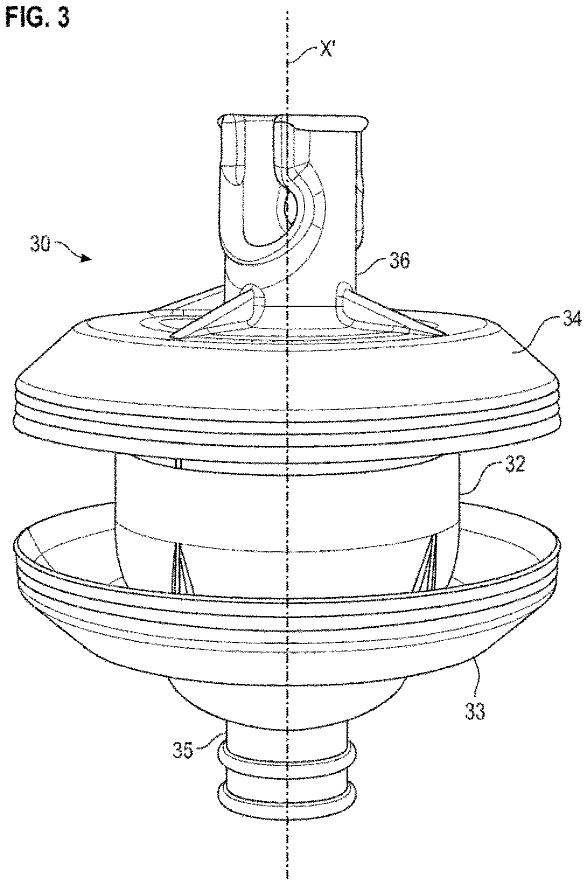

La figure 3 illustre un exemple d'une structure 30 de maintien du faisceau F de câbles. La structure 30 a avantageusement une forme générale en tonneau, qui s'étend le long d'un axe longitudinal X'. Une telle forme en tonneau implique que la structure 30 est creuse et comporte une chambre 31, non visible sur la figure 3, entourée d'une paroi annulaire 32. La structure 30 comporte une première couronne 33 et une seconde couronne 34, axialement opposée à la première couronne 33. Les couronnes 33, 34 peuvent présenter une épaisseur supérieure au reste de la structure 30 comme la paroi 32. Autrement dit, les couronnes 33, 34 sont plus rigides que le reste de la structure 30.

Un premier col 35 peut s'étendre en saillie de la première couronne 33 et un second col 36 peut également s'étendre en saillie de la seconde couronne 34. Chacun des cols 35, 36 débouche dans la chambre 31 et assurent le passage du faisceau F à travers la structure 30. Ces cols 35, 36 permettent d'améliorer le maintien du faisceau F une fois celui-ci introduit dans la structure 30.

La structure 30 de maintien est avantageusement plus souple que le support 10. Cela permet à la structure 30 de se déformer, notamment lorsqu'elle est montée dans l'ensemble 110. La structure 30 de maintien peut être en un matériau plus souple que le matériau du support 10. En variante, la structure 30 de maintien et le contre-support 20 peuvent être en un matériau ayant la même souplesse.

Ce matériau peut être un TPE ou un TPV pris de manière non limitative parmi le PA/EPDM, le PP/EPDM), le PP/NBR, le PA/NBR, le PP/SEBS ou encore le PP/SBS.

Avantageusement, le matériau de la structure 30 de maintien est un élastomère pris de manière non limitative parmi l'EPDM, le SBR, le NBR, l'IIR ou encore le NR ou bien un mélange de ces matériaux. La dureté shore de ce matériau est comprise entre 30 et 90 Shore A, et de préférence entre 40 et 70 Shore A.

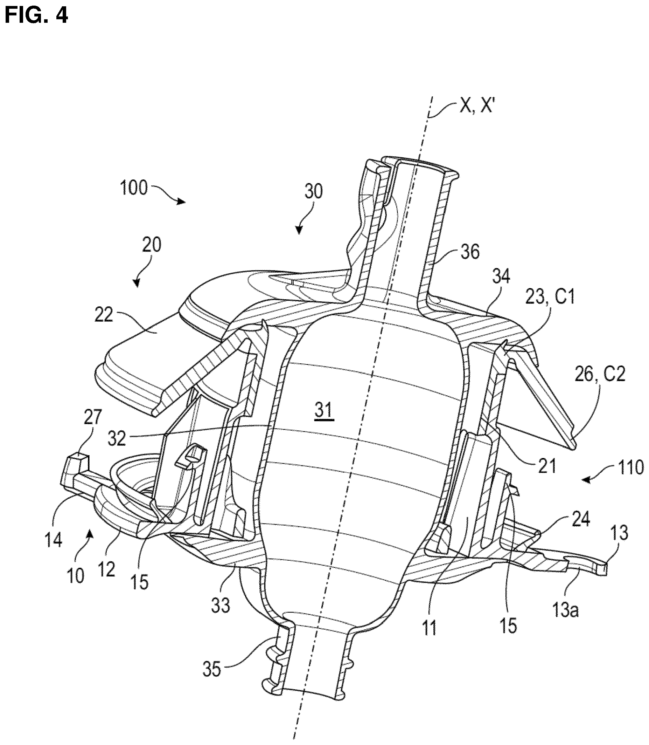

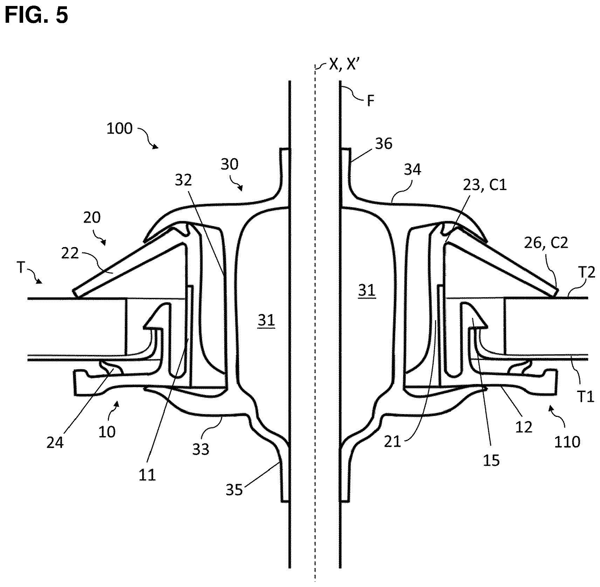

Les figures 4 et 5 illustrent une coupe transversale d'un exemple de passe-cloison 100 conforme à l'invention.

Dans cet exemple, la structure 30 de maintien du faisceau F de câbles est montée dans l'ensemble 110, tel que décrit précédemment. La chambre 31, délimitée par la paroi annulaire 32, de la structure 30 est logée dans la portion cylindrique 21 du contre-support 20. Comme évoqué précédemment, les couronnes 33, 34 peuvent être plus rigides que le reste de la structure 30 de par leur épaisseur. Cela permet de retenir axialement la structure 30 dans l'ensemble 110. En outre, la première couronne 33 est en appui sur le plateau 12 du support et la seconde couronne 34 est en appui sur la collerette 22 du contre-support 20. De la sorte, le passe-cloison 100 est étanche, fermant la communication entre l'habitacle du véhicule et l'espace moteur.

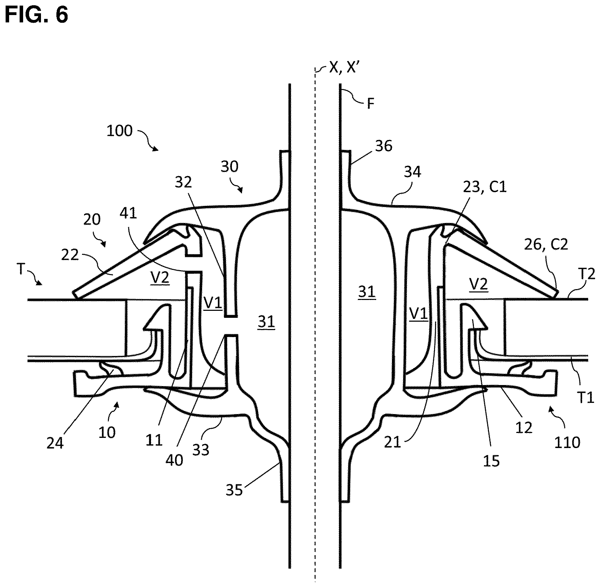

La figure 6 montre un autre exemple de passe-cloison 100 selon l'invention. Dans cet exemple, le support 10, le contre-support 20 et la structure 30 de maintien sont similaires à ce qui a été décrit précédemment.

Dans cet exemple, au moins un orifice 40 est ménagé dans la paroi annulaire 32 de la structure 30. De la sorte, une communication fluidique est permise entre la chambre 31 et un premier volume V1, défini par l'espace compris entre la structure 30 et le contre-support 20. Ce volume V1 peut être un volume circonférentiel qui s'étend tout autour de la structure 30. Le volume V1 peut aussi être défini localement, à savoir sans faire le tour complet de la structure 30 de maintien. Le fluide dans la chambre 31 et le volume V1 est ici de l'air.

La présence d'au moins un orifice 40 permet de définir un résonateur acoustique entre la chambre 31 et le premier volume V1. Grâce à cela, des fréquences (vibrations, bruits acoustiques) provenant de l'espace moteur peuvent être filtrées pour éviter qu'elles ne passent vers l'habitacle.

Dans une variante, au moins un autre orifice 41 est ménagé dans une paroi de la portion cylindrique 21 de le contre-support 20. De la sorte, une communication fluidique est permise entre le premier volume V1 et un second volume V2, ce second volume V2 étant défini entre le contre-support 20 et le tablier T. Ce second volume V2 peut être un volume circonférentiel qui s'étend tout autour de le contre-support 20. Le volume V2 peut aussi être défini localement, à savoir sans faire le tour complet de le contre-support 20. Le fluide dans les volumes V1 et V2 est ici de l'air.

La présence d'au moins un autre orifice 41 permet également de définir un résonateur acoustique entre le premier volume V1 et le second volume V2. Grâce à cela, la filtration des fréquences provenant de l'espace moteur peut être améliorée, notamment dans le cas d'une présence conjointe de l'orifice 41 et de l'orifice 40. Un double résonateur acoustique est alors défini, et une communication fluidique peut s'établir entre la chambre 31 et le second volume V2 par l'intermédiaire du premier volume V1.

En pratique, la fréquence de résonance du résonateur ainsi formé s'exprime, en première approximation (à savoir notamment sans correction liée à la géométrie) sous la forme suivante :

[Math. 1]

$$f_R = \frac{c}{2\pi} \sqrt{\frac{A}{VI}}$$

où : c est la vitesse du son dans le milieu fluide considéré, A est la section de l'orifice 40, 41, I est la profondeur de l'orifice 40, 41 (correspondant à l'épaisseur de la paroi annulaire 32 ou à l'épaisseur de la paroi de la portion cylindrique 21), et V est le volume de la chambre 31 ou du premier volume V1.

La fréquence de résonance peut ainsi être ajustée en modifiant la dimension des orifices 40, 41, en particulier leurs sections. De la sorte, il est possible de filtrer des fréquences autour de la fréquence de résonance.

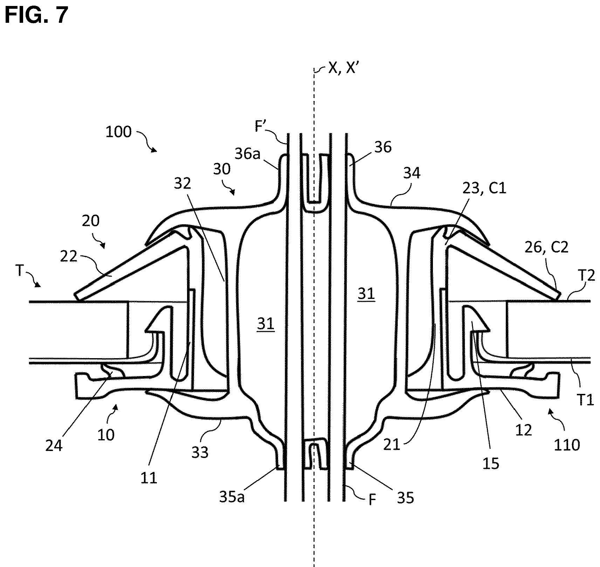

La figure 7 illustre un autre exemple de passe-cloison 100' configuré pour le passage d'au moins deux faisceaux F, F' de câbles. Dans un tel exemple, le support 10 et le contre-support 20 sont identiques à ce qui a été décrit pour le passe-cloison 100. Seule la structure 30 de maintien diffère en ce qu'elle est configurée pour le passage de deux faisceaux F, F' de câbles. Dans un tel cas, les couronnes 32, 33 comprennent chacune autant de cols 35, 36 qu'il y a de faisceaux F, F'. Dans l'exemple de la figure 7, le faisceau F de câbles traverse la structure 30 par le col 35 de la première couronne 33 et par le col 36 de la seconde couronne 34 tandis que l'autre faisceau F' de câbles traverse la structure 30 par le col 35a de la première couronne 33 et par le col 36a de la seconde couronne 34.

Les dimensions de la structure 30 de maintien restant sensiblement les mêmes entre le passe-cloison 100 et le passe-cloison 100', ce sont les dimensions du faisceau F, F' de câbles qui peuvent changer. Ainsi, plus le nombre de faisceaux F, F' augmente, plus les dimensions des faisceaux F, F', et principalement leurs diamètres, diminuent de sorte que le volume occupé par les faisceaux F, F' dans le passe-cloison 100' n'excède pas le volume de la structure 30 de maintien.

L'invention concerne également un procédé d'installation d'un faisceau F de câbles dans le passe-cloison 100 tel que décrit dans ce qui précède dans un tablier T séparant un habitacle d'un espace moteur d'un véhicule automobile.

Le support 10 et le contre-support 20 peuvent être pré-montés pour former l'ensemble 110 tel que présenté sur les figures 1 et 2. Alors que l'ensemble 110 est formé, une étape d'installation de l'ensemble 110 dans le tablier T d'un véhicule automobile est réalisée, de sorte que, par exemple, les appuis 14 du plateau 12 du support 10 compriment les plots 27 de sorte que la lèvre 24 annulaire se retrouve en appui sur la surface T1 du tablier T du côté habitacle et la collerette 22 du contre-support 20 se retrouve en appui sur la surface T2 du tablier T du côté du groupe moteur. Pour cela, la collerette 22 est insérée en force dans le passage ménagé dans le tablier T. La pression exercée sur la collerette 22 au contact du tablier T et la nature souple du contre-support 20 permet une déformation de la collerette 22 au passage du tablier T de sorte que la collerette 22 change d'orientation de sorte que son extrémité libre 26 se trouve en appui sur la surface T2 du tablier T, comme visible sur la figure 5, de sorte que le passe-cloison 100 soit retenu axialement dans le tablier T.

Alors que la collerette 22 est en appui sur la surface T2 du tablier T, la lèvre 24 est en appui sur la surface T1 du tablier T. Collerette 22 et lèvre 24 assurent ainsi respectivement l'étanchéité entre le tablier T et le support 10. En outre, les organes 15 de clipsage du support 10 coopèrent avec les bords de l'ouverture ménagée dans le tablier T de sorte que le passe-cloison 100 soit retenu axialement dans le tablier T.

Le faisceau F de câbles est inséré dans la structure 30 de maintien. La structure 30 est extensible ce qui lui permet de se déformer afin de laisser passer une extrémité du faisceau F de câbles, généralement rattachée à une pièce plus volumineuse que le faisceau F, avant que celui-ci soit tiré dans la structure 30. La structure 30 de maintien peut par exemple être similaire à celle décrite à la figure 3 et prendre une forme avantageuse de tonneau muni de cols 35, 36. Ces cols 35, 36 enserrent le faisceau F de câbles permettant son maintien de part en part de la structure 30.

En variante, au moins un autre faisceau F' de câbles peut être inséré dans la structure 30 de maintien. Dans un tel cas, cet autre faisceau F' est enserré par les cols 35a, 36a additionnels se trouvant respectivement sur la première couronne 33 et la seconde couronne 34.

Le ou les faisceau(x) F, F' installé(s), une étape de montage de la structure 30 de maintien dans l'ensemble 110 est réalisée. Pour cela, la structure 30 subit une déformation permise par la nature de son matériau souple, par exemple en élastomère. Par exemple, la seconde couronne 34 se déforme pour passer à travers la partie cylindrique 11 du support 10 et la portion cylindrique 21 du contre-support 20 avant de retrouver sa forme initiale au ressortir de sorte à reposer sur la collerette 22. La première couronne 33 repose alors sur le plateau 12 du support. Les première et seconde couronnes 33, 34 forment des retenues axiales de la structure 30 de sorte qu'une translation axiale, donc à travers le tablier T, soit limitée, voire empêchée.

En utilisation, la structure 30 de maintien permet de maintenir d'une part le faisceau F de câbles, de sorte que le faisceau F ne se déplace pas dans le passe-cloison 100 et d'autre part assure au faisceau F de pouvoir pivoter autour de son axe longitudinal, sensiblement parallèle à l'axe X, X' au niveau de chacune des couronnes 33, 34. En effet, la nature souple du matériau de la structure 30 permet des déformations locales de celle-ci, notamment au niveau du point de jonction entre chaque couronne 33, 34 et le faisceau F, c'est-à-dire le col 35, 36. En cas de sollicitation, le faisceau F peut alors se décaler par rapport à son axe longitudinal sans subir de dommage, la sollicitation/déformation étant absorbée par la structure 30 de maintien.

Par ailleurs, la languette 13 du support 10 sert au positionnement angulaire de l'ensemble 110 sur le tablier T. La fente 13a de la languette 13 coopère avec, par exemple, un ergot situé sur le tablier T. De la sorte, la languette 13, en utilisation, empêche la rotation du passe-cloison 100 autour de l'axe longitudinal X. Cela permet, entre autres, d'empêcher une torsion du faisceau F et une détérioration des câbles.

En variante, le support 10 et le contre-support 20 sont reçus séparément. Ainsi, préalablement aux étapes décrites précédemment, le procédé comporte une étape de montage du contre-support 20 sur le support 10. Durant cette étape, la portion cylindrique 21 du contre-support 20 est montée dans la partie cylindrique 11 du support 10 de sorte que le support 10 et le contre-support 20 soient solidaires entre eux pour former l'ensemble 110.

Il apparaît clairement qu'un passe-cloison 100, 100' tel que celui décrit précédemment permet d'améliorer la protection mécanique du faisceau F, F' de câbles en permettant un désalignement de ce dernier sans risque d'être endommagé. En effet, la souplesse de la structure 30 de maintien permet que le faisceau F, F' de câbles se déplace avec un certain degré de liberté par rapport à son axe longitudinal, sensiblement parallèle aux axes longitudinaux X, X' qui, en utilisation, sont perpendiculaires au tablier T dans lequel le passe-cloison 100, 100' est inséré.

Un autre avantage est l'amélioration de l'isolement entre l'ambiance véhicule et environnementale, par exemple entre l'habitacle et l'espace moteur. En effet, la structure 30 étant creuse avec une chambre 31, les vibrations sont diminuées. Les volumes V1 et V2 définis respectivement entre la structure 30 et le contre-support 20, et entre le contre-support 20 et le tablier T, peuvent également permettre de diminuer les vibrations. Ces performances acoustiques peuvent encore être améliorées grâce à la formation d'un résonateur acoustique.

Le passe-cloison 100, 100' selon l'invention permet également une facilitation de son installation ou d'entretien par un opérateur. En effet, la souplesse de la structure 30 de maintien du faisceau F, F' facilite son montage par un opérateur. Le passe-cloison 100, 100' peut aussi être entièrement démontable, ce qui facilite l'entretien ou le remplacement des différentes pièces en cas d'usure ou de défauts sans avoir à mettre au rebut l'ensemble.

## Revendications

1. Passe-cloison (100, 100') pour au moins un câble et/ou au moins un tuyau destiné à traverser un tablier (T) séparant un habitacle d'un espace moteur d'un véhicule automobile, ledit passe-cloison comportant :

   - un support (10) ;
   - un contre-support (20) monté sur le support (10) de sorte que le support (10) et le contre-support (20) puissent, en utilisation, venir chacun en regard d'une surface (T1, T2) opposée du tablier (T),

   ledit passe-cloison étant **caractérisé en ce qu'**il comporte, en outre, une structure (30) de maintien pour ledit câble et/ou tuyau, plus souple que le support (10) et le contre-support (20), et qui est par ailleurs montée de manière amovible à la fois sur le support (10) et sur le contre-support (20).

2. Passe-cloison (100, 100') selon la revendication 1, dans lequel le contre-support (20) est plus souple que le support (10).

3. Passe-cloison (100, 100') selon la revendication précédente, dans lequel le support (10) est réalisé en un matériau donné, le contre-support (20) et la structure (30) de maintien sont réalisés en un matériau plus souple que le matériau du support (10).

4. Passe-cloison (100, 100') selon l'une quelconque des revendications 2 ou 3, dans lequel le support (10) est réalisé en un matériau thermoplastique et le contre-support (20) est réalisé en un matériau thermoplastique élastomère, en un matériau thermoplastique élastomère vulcanisé ou en un matériau élastomère.

5. Passe-cloison (100, 100') selon l'une quelconque des revendications 3 ou 4, dans lequel la structure (30) de maintien est réalisée en un matériau élastomère, en un matériau thermoplastique élastomère ou en un matériau thermoplastique élastomère vulcanisé.

6. Passe-cloison (100, 100') selon l'une quelconque des revendications précédentes, dans lequel la structure (30) de maintien comprend une première couronne (33) et une seconde couronne (34), opposée à la première couronne (33), ladite première couronne (33) étant montée de manière amovible au contact d'un plateau (12) du support (10) et ladite seconde couronne (34) étant montée de manière amovible au contact d'une collerette (22) du contre-support (20).

7. Passe-cloison (100, 100') selon la revendication précédente, dans lequel au moins un premier col (35, 35a) et au moins un second col (36, 36a) sont respectivement en saillie de la première et de la seconde couronnes (33, 34), lesdits cols (35, 35a, 36, 36a) étant configurés pour maintenir le câble et/ou tuyau.

8. Passe-cloison (100, 100') selon l'une quelconque des revendications précédentes, dans lequel la structure (30) de maintien a une forme générale de tonneau, ceci permettant de définir une chambre (31) entourée d'une paroi annulaire (32).

9. Passe-cloison (100, 100') selon la revendication précédente, dans lequel la paroi annulaire (32) comporte au moins un premier orifice (40) de sorte qu'une communication fluidique soit permise entre la chambre (31) et un premier volume (V1), défini entre la structure (30) de maintien en forme de tonneau et le contre-support (20).

10. Passe-cloison (100, 100') selon l'une des revendications 8 ou 9, dans lequel le contre-support (20) comporte au moins un second orifice (41) de sorte qu'une communication fluidique soit permise entre un premier volume (V1), défini entre la structure (30) de maintien en forme de tonneau et le contre-support (20), et un second volume (V2), défini entre le contre-support (20) et le tablier (T).

11. Passe-cloison (100, 100') selon l'une quelconque des revendications précédentes, dans lequel le support (10) s'étendant autour d'un axe longitudinal (X) est pourvu d'au moins une languette (13) configurée pour empêcher, en utilisation, une rotation du passe-cloison (100, 100') autour de cet axe longitudinal (X) sensiblement parallèle avec le câble et/ou tuyau.

12. Procédé d'installation d'au moins un câble et/ou au moins un tuyau dans un passe-cloison (100, 100') selon l'une des revendications précédentes, ledit procédé comportant les étapes suivantes :

- installer un ensemble (110) comportant le support (10) et le contre-support (20) sur le tablier (T),
- insérer ledit câble et/ou tuyau dans la structure (30) de maintien, puis
- monter la structure (30) de maintien, munie du câble et/ou tuyau, sur ledit ensemble (110).

13. Procédé selon la revendication précédente, dans lequel préalablement à l'installation de l'ensemble (110), le contre-support (20) est monté sur le support (10) de sorte à former ledit ensemble (110).

**Patentansprüche**

1. Wanddurchführung (100, 100') für mindestens ein Kabel und/oder mindestens ein Rohr, das dazu bestimmt ist, durch einen Schurz (T) zu verlaufen, der eine Fahrgastzelle von einem Motorraum eines Kraftfahrzeugs trennt, wobei die Wanddurchführung umfasst:

- einen Halter (10);
- einen Gegenhalter (20), der so an dem Halter (10) montiert wird, dass der Halter (10) und der Gegenhalter (20) im Gebrauch jeweils einer gegenüberliegenden Fläche (T1, T2) des Schurzes (T) zugewandt sein können,

wobei die Wanddurchführung **dadurch gekennzeichnet ist, dass** sie weiter eine Haltestruktur (30) für das Kabel und/oder Rohr umfasst, die flexibler als der Halter (10) und der Gegenhalter (20) ist und die darüber hinaus abnehmbar an sowohl dem Halter (10) als auch dem Gegenhalter (20) montiert ist.

2. Wanddurchführung (100, 100') nach Anspruch 1, wobei der Gegenhalter (20) flexibler als der Halter (10) ist.

3. Wanddurchführung (100, 100') nach dem vorstehenden Anspruch, wobei der Halter (10) aus einem gegebenen Material hergestellt ist, der Gegenhalter (20) und die Haltestruktur (30) aus einem Material hergestellt sind, das flexibler als das Material des Halters (10) ist.

4. Wanddurchführung (100, 100') nach einem der Ansprüche 2 oder 3, wobei der Halter (10) aus einem thermoplastischen Material hergestellt ist und der Gegenhalter (20) aus einem thermoplastischen Elastomermaterial, aus einem vulkanisierten thermoplastischen Elastomermaterial oder aus einem Elastomermaterial hergestellt ist.

5. Wanddurchführung (100, 100') nach einem der Ansprüche 3 oder 4, wobei die Haltestruktur (30) aus einem Elastomermaterial, aus einem thermoplastischen Elastomermaterial oder aus einem vulkanisierten thermoplastischen Elastomermaterial hergestellt ist.

6. Wanddurchführung (100, 100') nach einem der vorstehenden Ansprüche, wobei die Haltestruktur (30) einen ersten Kranz (33) und einen dem ersten Kranz (33) gegenüberliegenden zweiten Kranz (34) umfasst, wobei der erste Kranz (33) abnehmbar in Kontakt mit einer Platte (12) des Halters (10) montiert ist und der zweite Kranz (34) abnehmbar in Kontakt mit einem Flansch (22) des Gegenhalters (20) montiert ist.

7. Wanddurchführung (100, 100') nach dem vorstehenden Anspruch, wobei mindestens ein erster Kragen (35, 35a) und mindestens ein zweiter Kragen (36, 36a) jeweils vom ersten und dem zweiten Kranz (33, 34) vorspringen, wobei die Krägen (35, 35a, 36, 36a) so konfiguriert sind, dass sie das Kabel und/oder Rohr halten.

8. Wanddurchführung (100, 100') nach einem der vorstehenden Ansprüche, wobei die Haltestruktur (30) eine allgemein tonnenförmige Form aufweist, was es ermöglicht, eine Kammer (31) zu definieren, die von einer ringförmigen Wand (32) umgeben ist.

9. Wanddurchführung (100, 100') nach dem vorstehenden Anspruch, wobei die ringförmige Wand (32) mindestens eine erste Öffnung (40) umfasst, sodass eine strömungstechnische Kommunikation zwischen der Kammer (31) und einem ersten Volumen (V1), das zwischen der tonnenförmigen Haltestruktur (30) und dem Gegenhalter (20) definiert ist, möglich ist.

10. Wanddurchführung (100, 100') nach einem der Ansprüche 8 oder 9, wobei der Gegenhalter (20) mindestens eine zweite Öffnung (41) umfasst, sodass eine strömungstechnische Kommunikation zwischen einem ersten Volumen (V1), das zwischen der tonnenförmigen Haltestruktur (30) und dem Gegenhalter (20) definiert ist, und einem zweiten Volumen (V2), das zwischen dem Gegenhalter (20) und dem Schurz (T) definiert ist, möglich ist.

11. Wanddurchführung (100, 100') nach einem der vorstehenden Ansprüche, wobei der Halter (10), der sich um eine Längsachse (X) erstreckt, mit mindestens einer Lasche (13) versehen ist, die so konfiguriert ist, dass sie im Gebrauch eine Drehung der Wanddurchführung (100, 100') um diese Längsachse (X) im Wesentlichen parallel zum Kabel und/oder Rohr verhindert.

12. Verfahren zum Installieren mindestens eines Kabels und/oder mindestens eines Rohrs in einer Wanddurchführung (100, 100') nach einem der vorstehenden Ansprüche, wobei das Verfahren die folgenden Schritte umfasst:

   - Installieren einer Baugruppe (110), die den Halter (10) und den Gegenhalter (20) umfasst, an dem Schurz (T),
   - Einführen des Kabels und/oder Rohrs in die Haltestruktur (30), und anschließend
   - Montieren der mit dem Kabel und/oder Rohr versehenen Haltestruktur (30) an der Baugruppe (110).

13. Verfahren nach dem vorstehenden Anspruch, wobei vor dem Installieren der Baugruppe (110) der Gegenhalter (20) an dem Halter (10) montiert wird, um die Baugruppe (110) zu bilden.

**Claims**

1. A bulkhead fitting (100, 100') for at least one cable and/or at least one pipe intended to pass through a dash panel (T) separating a passenger compartment from an engine compartment of a motor vehicle, said bulkhead fitting comprising:

   - a support (10);
   - a counter-support (20) mounted on the support (10) so that the support (10) and the counter-support (20) can, in use, each face an opposite surface (T1, T2) of the dash panel (T),

   said bulkhead fitting being **characterised in that** it further comprises a holding structure (30) for said cable and/or pipe, which is more flexible than the support (10) and the counter-support (20), and which is also removably mounted on both the support (10) and the counter-support (20).

2. The bulkhead fitting (100, 100') according to claim 1, wherein the counter-support (20) is more flexible than the support (10).

3. The bulkhead fitting (100, 100') according to the preceding claim, wherein the support (10) is made of a given material, the counter-support (20) and the holding structure (30) are made of a material that is softer than the material of the support (10).

4. The bulkhead fitting (100, 100') according to any one of claims 2 or 3, wherein the support (10) is made of a thermoplastic material and the counter-support (20) is made of an elastomeric thermoplastic material, a vulcanised elastomeric thermoplastic material or an elastomeric material.

5. The bulkhead fitting (100, 100') according to any one of claims 3 or 4, wherein the holding structure (30) is made of an elastomer material, elastomeric thermoplastic material or a vulcanised elastomeric thermoplastic material.

6. The bulkhead fitting (100, 100') according to any one of the preceding claims, wherein the holding structure (30) comprises a first ring gear (33) and a second ring gear (34), opposite the first ring gear (33), said first ring gear (33) being removably mounted in contact with a plate (12) of the support (10) and said second ring gear (34) being removably mounted in contact with a collar (22) of the counter-support (20).

7. The bulkhead fitting (100, 100') according to the preceding claim, wherein at least one first neck (35, 35a) and at least one second neck (36, 36a) project respectively from the first and second ring gears (33, 34), said necks (35, 35a, 36, 36a) being configured to hold the cable and/or pipe.

8. The bulkhead fitting (100, 100') according to any one of the preceding claims, wherein the holding structure (30) has the general shape of a barrel, this making it possible to define a chamber (31) surrounded by an annular wall (32).

9. The bulkhead fitting (100, 100') according to the preceding claim, wherein the annular wall (32) comprises at least a first orifice (40) so that fluid communication is allowed between the chamber (31) and a first volume (V1), defined between the barrel-shaped holding structure (30) and the counter-support (20).

10. The bulkhead fitting (100, 100') according to one of claims 8 or 9, wherein the counter-support (20) comprises at least one second orifice (41) so that fluid communication is allowed between a first volume (V1), defined between the barrel-shaped holding structure (30) and the counter-support (20), and a second volume (V2), defined between the counter-support (20) and the dash panel (T).

11. The bulkhead fitting (100, 100') according to any one of the preceding claims, wherein the support (10) extending around a longitudinal axis (X) is provided with at least one tab (13) configured to prevent, in use, rotation of the bulkhead fitting (100, 100') around this longitudinal axis (X) substantially parallel with the cable and/or pipe.

12. A method of installing at least one cable and/or at least one pipe in a bulkhead fitting (100, 100') according to one of the preceding claims, said method comprising the following steps:

   - installing an assembly (110) comprising the support (10) and the counter-support (20) on the dash panel (T),
   - inserting said cable and/or pipe into the holding structure (30), and then

- mounting the holding structure (30), fitted with the cable and/or pipe, on said assembly (110).

13. The method according to the preceding claim, wherein prior to installation of the assembly (110), the counter-support (20) is mounted on the support (10) so as to form said assembly (110).

# FIG. 1

**FIG. 2**

**FIG. 3**

**FIG. 4**

**FIG. 5**

**FIG. 6**

## FIG. 7

**EP 4 098 492 B1**

## RÉFÉRENCES CITÉES DANS LA DESCRIPTION

**Documents brevets cités dans la description**

- US 4912287 A

- FR 2884891